# EUROPÄISCHE PATENTANMELDUNG

(11) **EP 2 387 139 A1**
(43) Veröffentlichungstag der Anmeldung: **16.11.2011**
(21) Anmeldenummer: 11153901.1
(22) Anmeldetag: 09.02.2011
(51) Int. Cl.: H02M 3/335, A47C 20/04

(54) **Elektromotorischer Möbelantrieb mit einer Energieversorgungseinrichtung**

(30) Priorität: 08.05.2010 DE 202010005409 U
(71) Anmelder: Dewert Antriebs- und Systemtechnik GmbH, 32278 Kirchlengern (DE)
(72) Erfinder: Hille, Armin, 33659, Bielefeld (DE)
(74) Vertreter: Dantz, Jan Henning

(57) **Zusammenfassung**

Ein elektromotorischer Möbelantrieb (1) mit einer Energieversorgungseinrichtung (5) und mit einer Handbedienung (7) zum Verstellen von beweglichen Möbelbauteilen relativ zueinander, soll so ausgelegt werden, dass die Energieversorgungseinrichtung (5) gegenüber den bekannten Möbelantrieben verbessert wird.

Erfindungsgemäß ist der elektromotorische Möbelantrieb (1) so ausgelegt, dass die Energieversorgungseinrichtung (5) mit einem Quasi-Resonanz-Wandler ausgebildet und für einen Betrieb mit quasi-quadratischen Wellenformen ausgelegt ist. Die Energieversorgungseinrichtung (5) ist mit einem weiteren Betriebszustand ausgerüstet, um eine Freischaltung zu erreichen. In diesem Betriebszustand ist die Energieversorgungseinrichtung (5) am Netz angeschlossen und eine Steuereinrichtung (17) ist ausgeschaltet. Ferner ist die Energieversorgungseinrichtung (5) mit einer Freischalteinheit (30) ausgerüstet, die eingangsseitig über eine Koppeleinheit (31) mit der Motorsteuerung (6) und/oder der Handbedienung (7) gekoppelt ist und ausgangsseitig mit der Steuerungsversorgung (18) verbunden ist.

Der erfindungsgemäße elektromotorische Möbelantrieb ist besonders zum Antrieb der verstellbaren Bauteile eines Lattenrostes geeignet.

## Beschreibung

Die Erfindung betrifft einen elektromotorischen Möbelantrieb mit einer Energieversorgungseinrichtung zum Verstellen von beweglichen Möbelbauteilen relativ zueinander.

Derartige elektromotorische Möbelantriebe sind in unterschiedlichen Ausführungsformen bekannt. Sie sind als Linearantriebe mit einem linear verstellbaren Abtriebsglied oder als Rotationsantriebe mit einem rotierenden Abtriebsglied ausgebildet und haben sich in der Praxis bestens bewährt. Die Linearantriebe weisen einen oder eine Anzahl Elektromotore auf, wobei jedem Motor ein Drehzahlreduziergetriebe und einem weiteren dem Drehzahlreduziergetriebe nachgeschaltetem Getriebe beispielsweise in Form eines Gewindespindelgetriebes nachgeschaltet ist, welches aus der Drehbewegung des Motors eine Linearbewegung des Abtriebsgliedes erzeugt. Die Rotationsantriebe weisen wenigstens einem dem jeweiligen Elektromotor nachgeschaltetes Drehzahlreduziergetriebe auf, wobei das letzte Getriebeglied das Abtriebsglied bildet. Das Abtriebsglied des jeweiligen elektromotorischen Möbelantriebs steht mit einem festen und/oder mit einem beweglichen Möbelbauteil in Verbindung, so dass bei einem Betrieb des Elektromotors die beweglichen Möbelbauteile relativ zueinander verstellt werden. Dabei kann das Möbel als Lattenrost, Arbeitstisch, Bett, Liegefläche, Behandlungsliege, Krankenhaus- bzw. Pflegebett, sowie auch als eine Hubeinrichtung für Personen wie Lifter oder Patientenlifter ausgebildet sein.

Zum Betrieb der elektromotorischen Möbelantriebe haben sich Schaltnetzteile als Energieversorgungseinrichtungen bestens bewährt. Die Energieversorgungseinrichtung weist einen Betriebszustand Aus bei Trennung vom Netz und einen Betriebszustand Betrieb im regulären Betrieb auf. Die Schaltnetzteile besitzen einen von einem Steuerbaustein mit hoher Frequenz geschalteten Trenntransformator, welcher auch als Übertrager oder als Hochfrequenztransformator bezeichnet werden kann, der durch einen vorgeschalteten Halbleiterschalter auf der Primärseite mit einer hohen Schaltfrequenz ein- und ausgeschaltet wird. Dazu ist dem Steuerbaustein ein gesonderter Zwischenkreis zugeordnet, welcher eine Energiequelle des Steuerbausteins aufweist und den Steuerbaustein mit einer elektrischen Energie versorgt.

Das Dokument DE 10 2006 049 715 A1 illustriert ein Netzteil für motorische Antriebe, welches in einem Steckergehäuse als Schaltnetzteil ausgebildet ist.

Es sei noch der Stand der Technik einer Netzfreischaltung oder Freischaltungseinheit näher erläutert, wobei die Freischaltungseinheit wenigstens einen netzseitig gesteuerten Schalter in Form eines Relaisschalters oder eines Halbleiterschalters zur Trennung vom Netz aufweist. Im nicht erregten Zustand der Freischaltungseinheit befindet sich der wenigstens eine gesteuerte Schalter in einem geöffneten Zustand und leitet keine Netzspannung zu der Energieversorgungseinrichtung. Betätigt der Bediener eine Taste der Handbedienung, so wechselt die Freischaltungseinheit vom nicht erregten Zustand in den erregten Zustand, wobei der gesteuerte Schalter oder die Kontakte des gesteuerten Schalters in einen geschlossenen Zustand wechseln, wobei die Energieversorgungseinrichtung mit der elektrischen Energie aus dem Netz versorgt wird. Jetzt wechselt der Betriebszustand der Energieversorgungseinrichtung vom Betriebszustand Aus in den Betriebszustand Betrieb.

Der Erfindung liegt die Aufgabe zugrunde, einen verbesserten elektromotorischen Möbelantrieb mit einer Energieversorgungseinrichtung der eingangs näher beschriebenen Art zu schaffen.

Die Lösung wird bei einem elektromotorischen Möbelantrieb mit einer Energieversorgungseinrichtung mit den Merkmalen des Anspruchs 1 gelöst.

In vorteilhafter Weise ist die Energieversorgungseinrichtung mit einem Quasi-Resonanz-Wandler ausgebildet und für einen Betrieb mit quasi-quadratischen Wellenformen ausgelegt.

Demgemäß ist ein Elektromotorischer Möbelantrieb mit einer Energieversorgungseinrichtung und mit einer Handbedienung zum Verstellen von beweglichen Möbelbauteilen relativ zueinander bereitgestellt, wobei der elektromotorische Möbelantrieb wenigstens einen drehrichtungsumkehrbaren Elektromotor aufweist, wobei jedem Elektromotor ein Drehzahlreduziergetriebe nachgeschaltet ist und wobei jedem Drehzahlreduziergetriebe ein weiteres Getriebe nachgeschaltet ist, und wobei die Energieversorgungseinrichtung einen Netzanschluss aufweist, welcher mit dem Netz verbindbar ausgebildet ist, wobei die Energieversorgungseinrichtung die netzseitige Eingangsspannung in eine ausgangsseitige Kleinspannung transformiert, und einen Trenntransformator oder eine Übertragungseinheit zur galvanischen Trennung zwischen der netzgebundenen Eingangsseite und der kleinspannungsgebenden Ausgangsseite zum Betrieb des elektromotorischen Möbelantriebs aufweist, wobei die Energieversorgungseinrichtung nach Art eines Schaltnetzteils ausgebildet ist und einen Zwischenkreis, eine Steuereinrichtung zur Steuerung des Schaltnetzteils aufweist, und der Steuereinrichtung eine Steuerungsversorgung zugeordnet ist, wobei die Energieversorgungseinrichtung einen Betriebszustand Aus bei Trennung vom Netz und einen Betriebszustand Betrieb im regulären Betrieb aufweist, und ist dadurch gekennzeichnet, dass die Energieversorgungseinrichtung mit einem Quasi-Resonanz-Wandler ausgebildet und für einen Betrieb mit quasi-quadratischen Wellenformen ausgelegt ist.

Damit weist der elektromotorische Möbelantrieb mit dieser Energieversorgungseinrichtung einen äußerst geringen Energieverbrauch in einem Stand-By-Betrieb auf, in welchem er an ein elektrisches Versorgungsnetz angeschlossen ist und für eine Betätigung bereit ist. So ist auch die Forderung nach geringem Energieverbrauch von Geräten im Stand-By-Betrieb erfüllt.

In einer bevorzugten Ausgestaltung weist die Energieversorgungseinrichtung einen weiteren Betriebszustand Freigeschaltet auf, in welchem die Energieversorgungseinrichtung am Netz angeschlossen und die Steuereinrichtung ausgeschaltet ist. Dadurch bleibt ein Stand-By-Betrieb gewährleistet, wobei vorteilhaft zusätzlicher Energieverbrauch eingespart wird.

Dies kann dadurch erreicht werden, dass die Energieversorgungseinrichtung eine Freischalteinheit aufweist, die eingangsseitig über eine Koppeleinheit mit der Motorsteuerung und/oder der Handbedienung gekoppelt ist und ausgangsseitig mit der Steuerungsversorgung verbunden ist. Hierzu werden keine zusätzlichen Bedienungsteile erforderlich.

In einer Ausführungsform der Steuerungsversorgung ist diese als netzgebundene Steuerungsversorgung ausgebildet, wobei in einer anderen Ausführungsform der Steuerungsversorgung diese als netzungebundene Steuerungsversorgung ausgebildet ist und beispielsweise mit einer Batterie, einem Akkumulator oder einem Kondensator gekoppelt ist.

Es ist besonders vorteilhaft, dass die Freischalteinheit zum Ein- und Ausschalten der Steuerungsversorgung ausgebildet ist. Denn auf diese Weise wird es möglich, die vorhandene Energieversorgungseinrichtung selbst als Quasi-Netzfreischaltung zu verwenden. Durch ihre eigene galvanische Trennung ist diese im Betriebszustand Freigeschaltet vorgegeben. Relaiskontakte oder Halbleiterschalter sind nicht zusätzlich erforderlich.

Die Koppeleinheit kann zur Erzeugung einer Versorgungsleistung für die Steuereinrichtung ausgebildet sein. Dazu kann sie ein aktiver Optokoppler sein.

Die Steuereinrichtung der Energieversorgungseinrichtung ist in einer Ausführung mit der Koppeleinheit und/oder mit dem Handschalter elektrisch so verbunden, dass ein Schaltsignal und/oder eine Versorgungsspannung durch die Bedienung des Handschalters in die Steuereinrichtung einspeisbar ist. Dies erfolgt gemäß der o.g. Ausführung indirekt über zwischengeschaltete Bauteile wie den o.g. aktiven Optokoppler oder über andere elektrische Bauteile zwecks Signal- und Spannungsaufbereitung bzw. zur Spannungsanpassung, welche zwischen der Steuereinrichtung und dem Handschalter angeordnet sind. Im Gegensatz zu der indirekten Verbindung zwischen der Steuereinrichtung und dem Taster des Handschalters besteht die Verbindung in einer Weiterbildung in einer direkten Einwirkung, indem der Taster des Handschalters direkt und ohne galvanische Trennmittel mit der Steuereinrichtung verbunden ist. Auch in dieser Ausführung können elektrische Bauteile zur Spannungsaufbereitung oder Spannungsreduzierung zwischengeschaltet sein.

In einer Weiterbildung ist der Handschalter als kabelloser Handschalter ausgebildet und überträgt die Schaltsignale einer manuell betätigbaren Taste oder eines Schalters über eine Funkstrecke oder über eine Infrarotlichtstrecke zu einem Empfänger. Dieser Empfänger weist Halbleiterschalter oder Relaisschalter auf, welche stellvertretend für den manuell betätigbaren Taster gemäß der vorgenannten Weise mit der Steuereinrichtung direkt oder indirekt verbunden sind, oder gemäß einer weiteren Ausführungsform mit einer Freischalteinheit verbunden sind.

Bei den vorgenannten Ausführungsformen handelt es sich um Ausführungen der eingangs erläuterten Quasi-Netzfreischaltung. Wesentlich ist dabei, dass der jeweilige Handschalter auf die Steuereinrichtung steuernd oder stromversorgend einwirkt, so dass dadurch der Betriebszustand der Steuereinrichtung umschaltbar ausgebildet ist, beispielsweise von einem deaktiven Zustand in einen aktiven Zustand umgeschaltet ist, sowie ein manuell betätigbarer Taster oder ein Schalter des Handschalters betätigt wird. Der besondere Vorteil dieser Quasi-Netzfreischaltung besteht nun darin, dass die elektrische Schaltung der Energieversorgungseinrichtung nur geringfügig ergänzt wird, wobei Netzfreischaltgeräte des Standes der Technik vollständig eingespart werden. Ein weiterer Vorteil besteht darin, dass im Betriebszustand Freigeschaltet an der Primärwicklung der Übertragereinheit allenfalls eine Gleichspannung anliegt, die aber kein elektromagnetisches Wechselfeld aufweist und somit keine Spannung an der Sekundärwicklung erzeugt. Ein weiterer und wesentlicher Vorteil besteht noch darin, dass der gesamte netzseitige Eingangskreis der Energieversorgungseinrichtung im Betriebszustand Freigeschaltet zwar am Netz angeschlossen ist, jedoch eine sehr geringe Ruhestromaufnahme mit einer typischen Leistung von 0,1 Watt aufweist.

Die Freischalteinheit kann nur oder zusätzlich über eine Sparversorgungsschaltung aus dem Eingangskreis oder Zwischenkreis mit elektrischer Energie im Betriebszustand Freigeschaltet versorgt sein.

Für eine einfache Ansteuerung der Koppeleinheit kann die Motorsteuerung oder/und die Handbedienung mit einer Hilfsenergiequelle versehen sein, z.B. Batterie, Akkumulator oder/und Kondensator. Diese Hilfsenergiequelle kann auch als Notabsenkung für den elektromotorischen Möbelantrieb verwendbar sein, wobei die Hilfsenergiequelle mit dem jeweiligen Elektromotor des elektromotorischen Möbelantriebs verbindbar ist.

Die Energieversorgungseinrichtung kann einen Regelkreis aufweisen, welcher einen Sanftanlauf und eine Überstromabschaltung des Elektromotors ermöglicht. Somit sind für derartige Funktionen keine üblichen Schaltungen in der Motorsteuerung erforderlich.

In einer Ausführung ist die Energieversorgungseinrichtung zur Bereitstellung einer konstanten Leistung bei einer Haltespannung ausgebildet. Damit ist es möglich, dass die Haltespannung auf einem niedrigen Niveau, beispielsweise 3 oder 5 Volt, bei einer niedrigen Ausgangsleistung gehalten werden kann, wenn zum Beispiel ein Überlastfall aufgetreten ist. Diese Haltespannung ist dann ausreichend, dass ein weiterer sicherer Betrieb von z.B. Prozessoren der Motorsteuerung und Fehlermeldung oder Signalempfänger wie Funkempfänger oder Infrarotempfänger oder eine Anzeigeeinrichtung oder eine Buseinrichtung beibehalten werden kann.

Weitere Kennzeichen und Merkmale ergeben sich aus der nachfolgenden Beschreibung eines bevorzugten Ausführungsbeispiels und sind Gegenstand weiterer Unteransprüche.

Anhand der beigefügten Zeichnungen wird die Erfindung noch näher erläutert. Es zeigen:
- Figur 1: eine beispielhafte und schematische Darstellung eines als Linearantrieb ausgebildeten erfindungsgemäßen Möbelantriebs mit einer Energieversorgungseinrichtung;
- Figur 2: ein schematisches Blockschaltbild eines ersten Ausführungsbeispiels der Energieversorgungseinrichtung nach Fig. 1;
- Figur 3: eine schematische, grafische Darstellung verschiedener Betriebskennlinien;
- Figur 4: grafische schematische Darstellungen von verallgemeinerten Betriebskennlinien der Energieversorgungseinrichtung nach Fig. 1;
- Figur 5: eine schematische, grafische Darstellung verschiedener Betriebskennlinien mit unterschiedlichen Belastungen;
- Figur 6: ein schematisches Blockschaltbild eines zweiten Ausführungsbeispiels der Energieversorgungseinrichtung nach Fig. 1; und
- Figur 7: eine schematische, grafische Darstellung einer Schaltkurve.

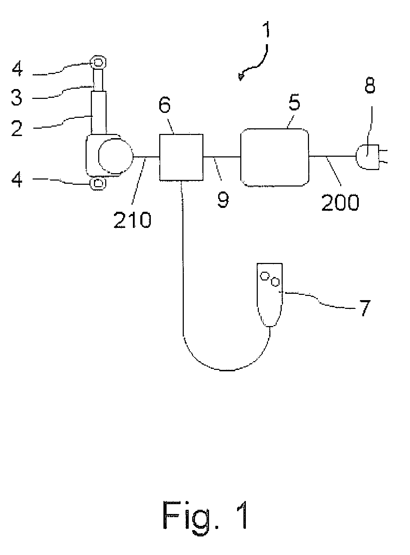

Die Figur 1 zeigt einen elektromotorischen Möbelantrieb 1 mit einer Energieversorgungseinrichtung 5.

Der elektromotorische Möbelantrieb 1 ist ein sogenannter Linearantrieb 2, und die Energieversorgungseinrichtung 5 ist als Schaltnetzteil ausgebildet. Der Linearantrieb 2 weist je nach Drehrichtung eines nicht näher dargestellten Elektromotors ein ein-und ausfahrbares Hubrohr 3 auf, an dessen freies Ende ein Anschlussteil in Form eines Gabelkopfes 4 angebracht ist. Ein weiteres Anschlussteil in Form eines weiteren Gabelkopfes 4 ist an dem Gehäuse des Linearantriebs 2 befestigt. Das jeweilige Anschlussteil steht in nicht näher dargestellter Weise mit jeweils einem Möbelbauteil in Verbindung, so dass sich bei Betrieb des Elektromotors die an dem Linearantrieb 2 angeschlossenen Möbelbauteile relativ zueinander bewegen.

Die Energieversorgungseinrichtung 5 ist gemäß der Darstellung nach Figur 1 über ein Netzkabel 200 mit einem Netzstecker 8 verbunden, wobei in einer anderen und nicht näher dargestellten Ausführungsform der Netzstecker 8 an der Energieversorgungseinrichtung 5 angeordnet sein kann. Es sei noch erwähnt, dass die Energieversorgungseinrichtung 5 gemäß der Darstellung nach Figur 1 mit einem umhüllenden Gehäuse versehen ist, so dass der Netzstecker 8 an dem Gehäuse angesetzt oder angeformt sein kann. Der Netzstecker 8 leitet über Netzkabel 200 die eingangsseitige Netzspannung zu der als Schaltnetzteil ausgebildeten Energieversorgungseinrichtung 5, welche sekundärseitig eine Kleinspannung in Form einer Gleichspannung abgibt und diese zu einer Motorsteuerung 6 weiterleitet.

An der Motorsteuerung 6 ist eine Handbedienung 7 in drahtgebundener Form angeschlossen, wobei gemäß der Darstellung nach Figur 1 die Handbedienung 7 zwei Drucktaster aufweist. Gemäß einer anderen nicht näher dargestellten Ausführungsform ist die Handbedienung 7 über eine drahtlose Übertragungsstrecke mit der Motorsteuerung 6 gekoppelt und sendet Funkwellen oder infrarote Lichtwellen zur Steuerung des wenigstens einen Elektromotors, d.h. Linearantriebs 2 an die Motorsteuerung 6.

Gemäß der Darstellung nach Figur 1 steht in einer ersten Ausführungsform die Handbedienung 7 mit einer Motorsteuerung 13 in Verbindung, wobei die Motorsteuerung 6 als Relaissteuerung mit Relaisschaltern oder/und als Halbleiterschaltung mit Halbleiterschaltern ausgebildet ist. Die manuell betätigbaren Tastschalter der Handbedienung 7 schalten dabei den Steuerstrom der Relaisschalter bzw. der Halbleiterschalter, wobei die Leistungsschalter der Relaisschalter bzw. der Halbleiterschalter den hohen Motorstrom des Linearantriebs 2 schalten.

Gemäß der Darstellung der Figur 1 steht in einer zweiten Ausführungsform die Handbedienung 7 mit der Motorsteuerung 6 in Verbindung, welche ein Versorgungskabel 9 der Energieversorgungseinrichtung 5 und ein Motorkabel 210 des Elektromotors des Linearantriebs 2 und die elektrischen Leitungen der manuell betätigbaren Tastschalter der Handbedienung 7 miteinander verbindet. Gemäß dieser Ausführungsform sind die Kontakte der manuell betätigbaren Tastschalter der Handbedienung 7 als Leistungsschalter ausgebildet und schalten bei Tatsendruck den hohen Motorstrom.

In einer weiterführenden, jedoch nicht näher dargestellten Ausführungsform, ist die Energieversorgungseinrichtung 5 in dem Gehäuse des Linearantriebs 2 eingesetzt oder daran angesetzt, wobei der Linearantrieb 2 in nicht näher dargestellter Weise nach Art eines Doppelantriebes aufgebaut sein kann, welcher wenigstens einen Motor, jedoch vorzugsweise zwei Motoren in einem gemeinsamen Gehäuse aufnimmt.

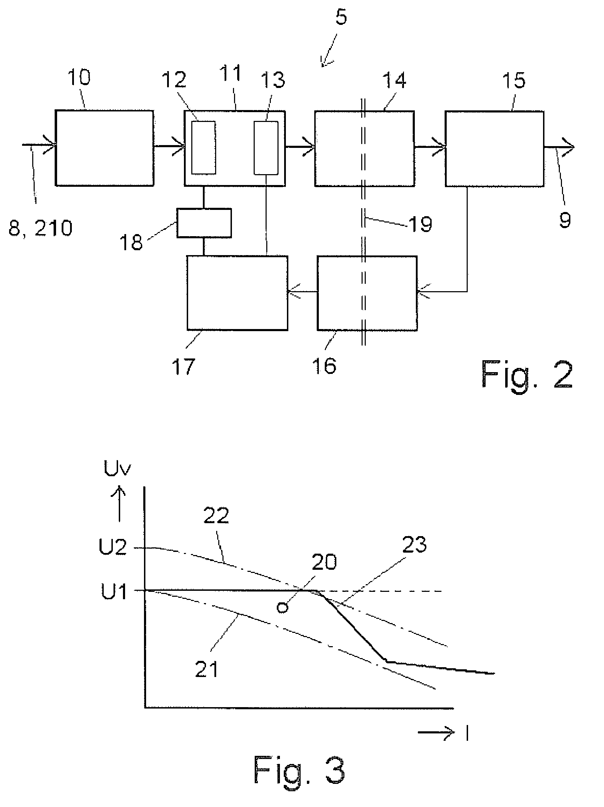

Figur 2 zeigt ein schematisches Blockschaltbild eines ersten Ausführungsbeispiels der Energieversorgungseinrichtung 5 nach Figur 1.

Die Energieversorgungseinrichtung 5 weist einen Eingangskreis 10, einen Zwischenkreis 11, eine Übertragereinheit 14, eine Sekundäreinheit 15, einen Optokoppler 16, eine Steuereinrichtung 17 und eine Steuerungsversorgung 18 auf.

Der Eingangskreis 10 ist eingangsseitig (durch Pfeile angedeutet) mit dem Netz über Netzstecker 8 und Netzkabel 210 koppelbar. In dem Eingangskreis 10 sind übliche Netzentstörglieder, wie Kondensatoren und Drosseln, sowie auch Sicherungen enthalten, die hier nicht näher gezeigt sind. Der Eingangskreis 10 ist mit dem Zwischenkreis 11 verbunden, welcher eine Gleichrichtung 12 und einen Schaltbaustein 13, z.B. einen Schalttransistor, aufweist. Der Zwischenkreis 11 ist mit dem Schaltbaustein 13 an die Übertragereinheit 14 gekoppelt. Die Übertragereinheit 14 weist einen Transformator mit galvanischer Trennung 19 auf, welche sich durch die Energieversorgungseinrichtung 5 hindurch erstreckt. An der Sekundärseite der Übertragereinheit 14 ist die Sekundäreinheit 15 angeschlossen, welche eine Versorgungsspannung Uv zur Versorgung des Linearantriebs 2 über das Versorgungskabel 9 an die Motorsteuerung 6 bereitstellt. Eine Rückwirkung der Sekundäreinheit 15 ist über einen Optokoppler 16 mit galvanischer Trennung 19 an die Steuereinrichtung 17 angeordnet. Die Steuereinrichtung 17 steuert den Schaltbaustein 13 zur Regelung der Versorgungsspannung Uv der Sekundäreinheit 15. Die Steuereinrichtung 17 wird durch eine Steuerungsversorgung 18 mit elektrischer Energie versorgt.

In einer Ausführung der Energieversorgungseinrichtung 5 sind die Steuereinrichtung 17 und der Schaltbaustein 13 mit dem Regelkreis gekoppelt und derart verschaltet, dass die Höhe des an der Steuereinrichtung 17 eingehenden Signals des Optokopplers 16, wobei die Eingangsspannung des Optokopplers 16 mit der ausgangsseitigen Versorgungsspannung Uv gekoppelt ist, die Steuereinrichtung 17 derart steuert, dass die durch die Steuereinrichtung 17 steuernde Schaltfrequenz des Schaltbausteins 13 geführt ist. Somit ist für den Regelkreis eine Rückkopplungseinrichtung geschaffen, welche eingangsseitig mit der Versorgungsspannung Uv beaufschlagbar ist und ausgangsseitig die Schaltfrequenz des Schaltbausteins 13 aufweist. Der Schaltbaustein 13 schaltet in einem hochfrequenten Frequenzbereich die Eingangsspule der Übertragereinheit 14 und bildet zusammen mit der Übertragereinheit 14 eine Übertragungscharakteristik, welche in konstruktiver Form derart ausgestaltet ist, dass in Abhängigkeit der ansteuerbaren Schaltfrequenz des Schaltbausteins 13 sich die übertragbare elektrische Leistung der Übertragereinheit 14 ändert. Mit zunehmendem Stromfluss an der Ausgangsseite der Energieversorgungseinrichtung 5 ist das Signal am Optokoppler 16 veränderbar, was eine Änderung der Schaltfrequenz des Schaltbausteins 13 ändert. Vergrößert sich der Stromfluss an der Ausgangsseite der Energieversorgungseinrichtung 5 weiterhin, so verändert sich die Schaltfrequenz des Schaltbausteins 13 derart, dass die Übertragungscharakteristik der Übertragereinheit einen weniger idealen Zustand einnimmt, was mit einer Reduzierung der am Ausgang der Energieversorgungseinrichtung 5 in Wirkverbindung steht. Im Falle eines Kurzschlusses oder einer hohen Überbelastung an der Ausgangsseite der Energieversorgungseinrichtung 5 sind Schaltfrequenzbegrenzungsmittel vorgesehen, welche mit dem Eingangsglied des Schaltbausteins 13 und mit der Steuereinrichtung 17 einen Zwischenregelkreis bilden und die Schaltfrequenz des Schaltbausteins derart regelnd begrenzen, dass daraus die Haltespannung Uh resultiert. Somit sind zumindest der Optokoppler 16, die Steuerungseinrichtung 17, der Schaltbaustein 13, die Übertragereinheit 14 und ggf. auch die Sekundäreinheit 15 mit dem eingangs näher beschriebenen Regelkreis gekoppelt oder darin angeordnet. Dabei sind in oder an dem Regelkreis fest einstellbare oder variabel verstellbare Netzmittel geschaltet, welche die Höhe der Haltespannung Uh bestimmen.

Dabei weist die Energieversorgungseinrichtung 5 einen Betriebszustand Aus bei Trennung vom Netz und einen Betriebszustand Betrieb im regulären Betrieb auf.

Figur 3 illustriert eine schematische, grafische Darstellung verschiedener Betriebskennlinien.

Mit dem Bezugszeichen 20 ist ein Betriebspunkt eines Linearantriebs 2 schematisch in einem Diagramm Versorgungsspannung Uv über einem Strom I gezeigt. Eine erste Transformatorkennlinie 21 eines konventionellen Transformators des Standes der Technik (z.B. mit EI-Kern) mit einer Leerlaufspannung U1, z.B. 30V verläuft bei Belastung mit einer Spannungsabnahme nach unten, jedoch nicht durch den Betriebspunkt 20. Das bedeutet, dass ein Linearantrieb 2 in dieser Ausbildung mit einem solchen Betriebspunkt 20 in diesem nur eine reduzierte Leistungsfähigkeit aufweist. Um den Betriebspunkt 20 zu erreichen oder diesen abzudecken, kann die Leerlaufspannung von U1 auf U2 erhöht werden, wie mit der zweiten Transformatorkennlinie 22 eines anderen Transformators des Standes der Technik gezeigt ist. Im ungünstigsten Fall liegt diese Leerlaufspannung U2 jedoch in einem Bereich mit anderen Normanforderungen, z.B. außerhalb einer Sicherheitskleinspannung, und macht somit zusätzliche Maßnahmen beispielsweise in Form einer versorgungsspannungsabhängigen Abschaltung von Transformatarwicklungen und/oder von Glättungskondensatoren erforderlich. Außerdem erhöht sich das Gewicht eines konventionellen Transformators gemäß Kennlinie 22 stark.

Die Energieversorgungseinrichtung 5 weist nun eine Kennlinie 23 auf, welche von der üblichen Leerlaufspannung U1 ausgeht und bis über den Betriebspunkt 20 verläuft. Sie fällt erst danach ab, wie unten noch näher erläutert wird. Die durch gezogene gestrichelte Linie entspricht einem Idealverlauf.

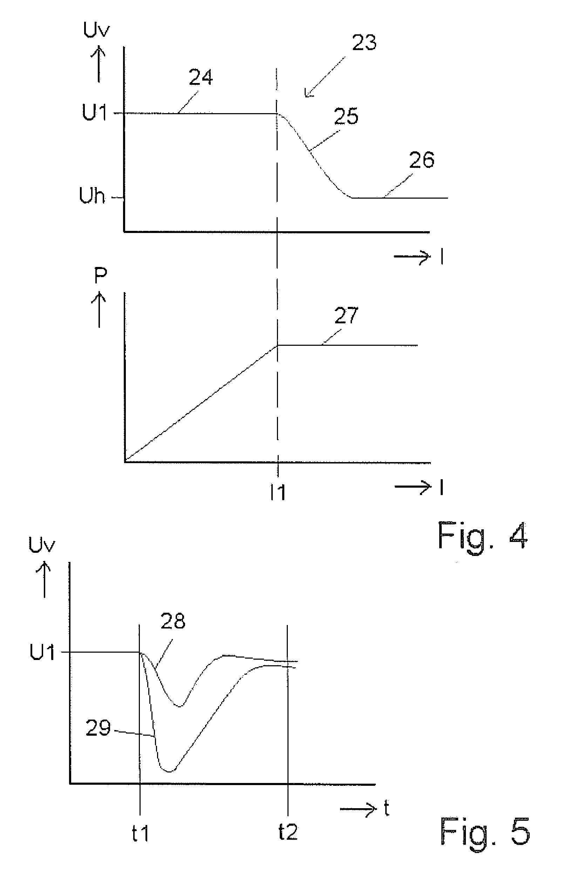

Figur 4 zeigt grafische schematische Darstellungen von verallgemeinerten Betriebskennlinien 23 der Energieversorgungseinrichtung 5 nach Fig. 1 und 2.

In dem oberen Schaubild ist die Versorgungsspannung Uv über dem entnehmbaren Strom I der Energieversorgungseinrichtung 5 als Kennlinie 23 aufgetragen. Die Kennlinie 23 verläuft von der Leerlaufspannung U1 in einem ersten Abschnitt 24 im Wesentlichen waagerecht bis zu einem bestimmten Strom I1. Dann fällt sie unter einem bestimmten Winkel nach unten in einem zweiten Abschnitt 25 ab, bis sie eine untere Haltespannung Uh erreicht, die dann in einem dritten Abschnitt 26 weiterhin gehalten wird.

In dem darunter liegenden Schaubild ist eine Leistung P der Energieversorgungseinrichtung 5 als Leistungskurve 27 über dem Strom I passend zu dem darüber liegenden Schaubild aufgetragen. Es ist erkennbar, dass die Leistung P bis zum Erreichen des Stroms I1 ansteigt. Danach wird die Leistung P im Bereich des zweiten Abschnitts 25 und des dritten Abschnitts 26 der Kennlinie der Energieversorgungseinrichtung 5 konstant gehalten.

Dieses oben beschriebene Verhalten der Energieversorgungseinrichtung 5 wird dadurch erreicht, dass die Übertragereinheit 14 und die Steuereinrichtung 17 mit dem Schaltbaustein 17 und der Rückführung von der Sekundäreinheit 15 einen Regelkreis bilden.

Figur 5 zeigt eine schematische, grafische Darstellung verschiedener Betriebskennlinien mit unterschiedlichen Belastungen, wobei die Versorgungsspannung Uv über der Zeit t aufgetragen ist.

Ausgehend von der Leerlaufspannung U1 wird zu einem Zeitpunkt t1 der Linearantrieb 5 eingeschaltet. Dabei ergibt sich die obere Kennlinie mit einem Einschaltabschnitt 28, bei welchem bei Anlauf des Motors des Linearantriebs 2 die Spannung Uv zunächst abfällt und dann wieder bis zu einem weiteren Zeitpunkt t2 ansteigt. Auf diese Weise ist ein Sanftanlauf des Linearantriebs 5 möglich.

Ist der Linearantrieb 2 hoch belastet, zeigt sich die untere Kennlinie mit einem Belastungsabschnitt 29. Hier ist der Spannungseinbruch wesentlich größer. Hier ist keine Blockierung gezeigt, sondern eine Art Schweranlauf, da die Spannung wieder bis zum Zeitpunkt t2 ansteigt. Um diese beiden Fälle zu unterscheiden, wird ein Kriterium dU/dt, welches die Schnelligkeit des Spannungseinbruchs charakterisiert, benutzt. Dies ist in der Steuereinrichtung 17 der Energieversorgungseinrichtung 5 berücksichtigt. Damit bildet sie auch eine Erkennung einer Überlastung des Linearantriebs 5 und kann dieser entsprechend begegnen, indem sie die Versorgungsspannung für den Motor auf die Haltespannung Uh herunterstellt oder abschaltet. Auch ein Kurzschluss auf der Sekundärseite ist so erfassbar und führt zu keiner Gefahr. Dies kann auch geeignet signalisiert werden, was leicht vorstellbar ist.

Das Herunterstellen der Haltespannung Uh kann in einer Ausführungsform im Falle einer Überbelastung der Energieversorgungseinrichtung 5 oder des Linearantriebs 2 auf Dauer oder zeitlich begrenzt erfolgen.

Die Regelung der Versorgungsspannung Uv kann so erfolgen, dass der Prozess des Hochregelns der Versorgungsspannung Uv nach einem Einbruch von der Höhe der aktuell vorhandenen Last abhängig ist. Damit ist eine Art aktiver Regelung gebildet. Die Zeitspanne zwischen t1 und t2 beträgt zum Beispiel bei einem Sanftanlauf oder Schweranlauf zwischen 15D...350 ms, bei einem Ansprechen einer Überlast hinsichtlich einer so genannten Überstromabschaltfunktion im Bereich von 1...2 s.

Daraus ergibt sich, dass alle elektronischen Bauteile, auch in der Motorsteuerung 6, optimal eingesetzt und nicht überdimensioniert gestaltet sind.

Daraus ergibt sich weiterhin eine vorteilhafte konstruktive Bauweise einer Energieversorgungseinrichtung 5 und/oder eines Linearantriebs 2, wobei alle in der Wirkkette stehenden elektrischen und mechanischen Bauteile beginnend von dem elektrisch Energie einbringenden Netzstecker 8 bis hin zum mechanisch Energie ausgebenden Anschlussteil 2 des Linearantriebs 2, wobei alle Bauteile der Wirkkette bezogen auf die Leistungsübertragung aufeinander anpassbar ausgebildet sind. Zum Einen ist durch die erfindungsgemäße Energieversorgungseinrichtung 5 in vorteilhafter Weise ein motor- und getriebeschonender mechanischer Sanftanlauf des Linearantriebs 2 gebildet, was rückwirkend auf die elektrisch übertragenden Komponenten der Energieversorgung 5 einen elektrisch schonenden Sanftanlauf erzeugt. Somit sind in vorteilhafter Weise alle Komponenten des elektromotorischen Möbelantriebs 1 preiswert im Aufbau gestaltbar.

Die zuvor genannten Regelungsfälle zur Erzeugung der Kennlinien gemäß den Figuren 3 bis 5 können in einer nicht näher dargestellten Ausführungsform durch einen hartverdrahteten Regelkreis gebildet sein. Dieser bietet im Gegensatz zu einem mikrokontrollerbetriebenem Regelkreis den Vorteil, dass er, insbesondere beim Anlegen der Netzspannung an die Eingänge der Energieversorgungseinrichtung 5, schneller reagiert. Die Regelkreisschaltung kann in bekannter Weise aus Operationsverstärkern, Transistoren, Widerständen und Kondensatoren bestehen und wenigstens einen Teil der Steuereinrichtung 17 bilden. In einer vorteilhaften Ausführungsform der Steuereinrichtung 17 weist diese einen Quasi-Resonanz-Wandler auf oder ist durch einen Quasi-Resonanz-Wandler gebildet. Dabei kann in einer weiteren Ausführungsform der Quasi-Resonanz-Wandler in einem IC-Gehäuse angeordnet sein und beinhaltet zumindest Teile der Regelkreisschaltung. Somit ist es in vorteilhafter Weise möglich, die Steuereinrichtung flexibel aufzubauen und in einer Regelkreisschaftung zu integrieren. In einer bevorzugten Ausführungsform weist der Zwischenkreis 11 wenigstens einen Teil der Regelkreisschaltung auf.

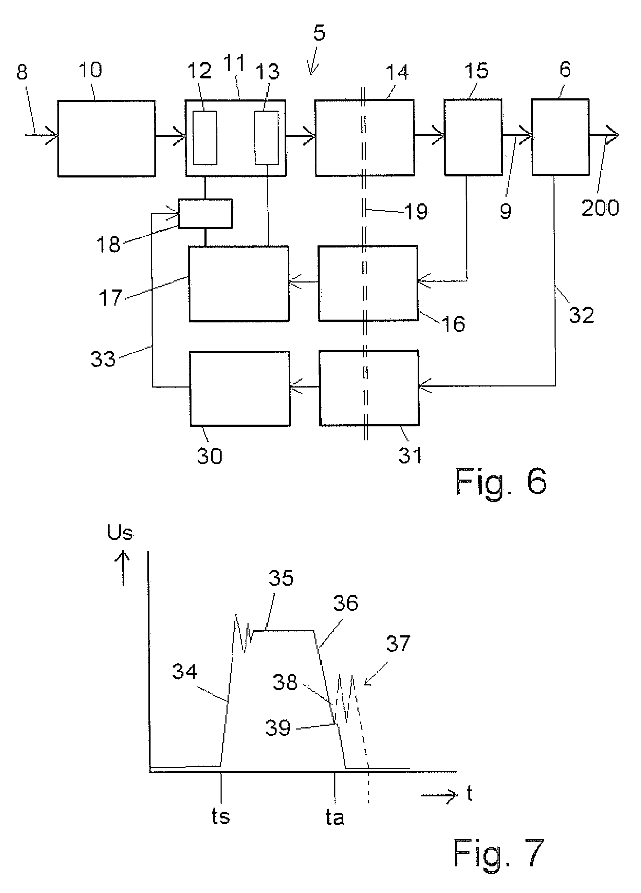

Ein zweites Ausführungsbeispiel der Energieversorgungseinrichtung 5 nach Figur 1 und 2 ist in Figur 6 in einem schematischen Blockschaltbild dargestellt. Dabei ist die Motorsteuerung 6 nach Fig. 1 hinzugefügt.

Im Unterschied zu dem ersten Ausführungsbeispiel nach Figur 2 ist hier die Energieversorgungseinrichtung 5 mit einer Freischalteinheit 30 ausgestattet. Die Freischalteinheit 30 ist eingangsseitig mit einer Koppeleinheit 31 verbunden. Eine Ansteuerung erfolgt über eine Steuerleitung 32, die am Eingang der Koppeleinheit 31 angeschlossen ist und ein Steuersignal aus der Motorsteuerung 6 führen kann. Ausgangsseitig ist die Freischalteinheit 30 über eine Ausgangsleitung 33 mit der Steuerungsversorgung 18 der Steuereinrichtung 17 verbunden. Die Koppeleinheit 31 ist z.B. ein Optokoppler mit galvanischer Trennung 19 und einem aktiven Ausgang. Das bedeutet, dass bei Anliegen eines Eingangssignals über die Steuerleitung 32 ein Ausgangssignal der Koppeleinheit 31 auch eine Leistung erzeugt, mit welcher die Freischalteinheit 30 versorgt wird. Dazu kann die Koppeleinheit 31 ein aktiver Optokoppler sein.

Somit weist die Energieversorgungseinrichtung 5 einen weiteren Betriebszustand Freigeschaltet auf, in welchem die Energieversorgungseinrichtung 5 am Netz angeschlossen ist und die Steuereinrichtung 17 ausgeschaltet ist.

Ein Signal der Steuerleitung 32 wird zum Beispiel durch Drücken eines Betätigungselementes der Handbedienung 7 und/oder Loslassen desselben über die Motorsteuerung 6 bei Ein- und/oder Ausschalten des Linearantriebs 2 erzeugt. Zunächst wird der Ausschaltfall betrachtet. Das zugehörige Signal kann zum Beispiel ein Spannungssprung von Uv auf 0 Volt sein. Dabei erzeugt die Koppeleinheit 31 auf der Ausgangsseite keine Leistung mehr, und die Freischalteinheit 30 gibt diese Leistungslosigkeit beispielsweise als ein "Nullsignal" über die Ausgangsleitung 33 an die Steuerungsversorgung 18 der Steuereinrichtung 17 weiter. Die Steuerungsversorgung 18 unterbindet daraufhin die Versorgung der Steuereinrichtung 17, woraufhin die Energieversorgungseinrichtung 5 ausgeschaltet oder in einen Schlaf- bzw. Stromsparmodus geschaltet wird. Sie ist zwar noch am Netz angeschlossen, jedoch kann sekundärseitig keine Leistung entnommen werden. Damit ist eine so genannte Freischaltungsfunktion bzw. Quasi-Netzfreischaltungsfunktion gebildet.

Bei einem Einschalten wird bei Betätigung der Handbedienung 7 ein Signal mittels einer Hilfsspannung erzeugt, die zum Beispiel von einer Energiequelle in der Motorsteuerung 6 oder in der Handbedienung 7 geliefert wird. Diese Energiequelle kann zum Beispiel eine Batterie, ein Akkumulator und/oder ein Kondensator sein, welche zur Notabsenkung des Linearantriebs 2 verwendet werden. Sie können aber auch speziell für den Fall der Freischaltung vorgesehen sein. Dieses so erzeugte Signal bewirkt über die Steuerleitung 32, dass die Koppeleinheit 31 die Freischalteinheit 30 einschaltet, welche daraufhin über die Ausgangsleitung 33 die Steuerungsversorgung 18 der Steuereinrichtung 17 wieder zum Betrieb der Energieversorgungseinrichtung 5 einschaltet.

Der Betriebszustand Aus kann auch als Weiterführung des Betriebszustandes Freigeschaltet angesehen werden, wobei sich jedoch die Energieversorgungseinrichtung 5 selbsttätig in den Betriebszustand Aus versetzt, wenn der manuell betätigbare Tastschalter der Handbedienung 7 oder wenn ein anderer Schalter, beispielsweise ein durch eine Buseinrichtung gesteuerter Schalter, nicht betätigt ist. Der Betriebszustand Freigeschaltet kann auch nach Ablauf einer vorgegebenen Zeitspanne in den Betriebszustand Aus selbsttätig wechseln.

Die Freischalteinheit 30 kann auch über eine Sparversorgungsschaltung von der noch anliegenden Netzspannung am Eingangskreis 10 oder Zwischenkreis 11 mit einem äußerst geringen Leistungsverbrauch versorgt werden.

Beide Ausführungsbeispiele der Energieversorgungseinrichtung 5 sind bevorzugt mit einem so genannten Quasi-Resonanz-Wandler ausgebildet. Außerdem wird ein Betrieb mit quasi-quadratischen Wellenformen bevorzugt, was in Figur 7 mit einer schematischen, grafischen Darstellung einer Schaltkurve illustriert ist.

Bei einem Einschaltvorgang der Schalteinheit 13 durch die Steuereinrichtung 17 steigt eine Schaltspannung Us am Ausgang der Schalteinheit 13 zunächst in einer ansteigenden Flanke 34 an und geht über in einen Dachabschnitt 35. Beim Ausschalten fällt die Schaltspannung Us zunächst in einer absteigenden Flanke 36 bis zum Beginn einer Ausschaltschwingung 37, die aus mehreren Schwingungen besteht, ab, bevor sie Null Volt oder einen Ruhewert einnimmt. Der Betrieb mit quasi-quadratischen Wellenformen sorgt nun dafür, dass die absteigende Flanke 36 bei Beginn der Ausschaltschwingung 37 nur bis in ein Tal 38 verläuft und dann sofort auf Null Volt oder den Ruhewert abfällt. Dabei werden die Ausschaltschwingungen 37 nicht mehr durchlaufen. Deshalb wird auch die durch diese Ausschaltschwingungen 37 verbrauchte Energie nicht mehr benötigt. Außerdem reduziert sich aufgrund einer so verminderten Schwingungserregung eine Abstrahlung von Störungen hinsichtlich elektromagnetischer Verträglichkeit (EMV).

Zusammenfassend ist festzuhalten:
- Ein hoher Anlaufstrom, der im Wesentlichen auf der Massenträgheit des Motors des Linearantriebs 2 der vom Antrieb zu bewegenden Last basiert, wird über einen Regelkreis begrenzt.
- Alle elektronischen Bauteile können optimal kosten- und bauraumeffizient ausgelegt werden, was ebenso eine Reduzierung des Montageaufwands bedeutet.
- Alle mechanischen Bauteile, die dem Motor nachgeschaltet sind, wie beispielsweise Getrieberäder, als auch der Motor selbst, werden durch diesen Regelkreis geschont, da mechanische Lastspitzen, insbesondere während des Anlaufs des Motors, reduziert werden.
- Bei einer bevorzugten Versorgungsspannung von Uv = 30 V sinkt diese nach einem Einschalten des Motors zwar ab, unterschreitet jedoch nicht den Schwellenwert zum Betrieb von Relais, Leistungshalbleitern oder Prozessoren bzw. Speicherbausteinen.
- Das Absinken der Versorgungsspannung Uv kann auch als eine Art Nachbildung der üblichen El- oder Ringkerntransformatoren angesehen werden. Hinzu addiert wird jedoch noch die Eigenschaft der Einschaltstrombegrenzung und der Ausgangsleistungsbegrenzung.
- Für den Regelkreis gibt es eine Rückführung von der Sekundäreinheit 15. Es ist auch eine Rückführung vom Zwischenkreis 11 oder von der Übertragungseinheit 14 möglich.
- Alle Varianten der Energieversorgungseinrichtung 5 können als Steckernetzteil, als Gehäuse zur Bodenaufstellung oder als Netzteil in einer Steuerung (auch in deren Gehäuse) oder in einem Antriebsgehäuse eingesetzt werden.
- Zur Kühlung einzelner elektronischer Bauteil ist ein mit Luftschlitzen versehenes Gehäuse vorgesehen. Bei einem geschlossenen Gehäuse (Wasser- und Staubschutz) können Kühlflächen/-rippen in das Gehäuse integriert werden. Hierzu kann gut wärmeleitender Kunststoff vorgesehen sein.
- Geringe Leistungsaufnahme in einem Stand-By-Betrieb, d.h. wenn ein Netzanschluss vorliegt, aber kein Betriebszustand Freigeschaltet vorhanden ist.
- Aufgrund eines Weitbereichseingangs für Netzspannungen von 90...264 V und Netzfrequenzen von 47...63 Hz, die optional auch manuell mittels Schalter/Codierstecker/dritter Primärpin umschaltbar oder durch Anstecken/Anbringen eines entsprechenden Steckeradapters selbsttätig umschaltbar/erkennbar sind, ist der elektromotorische Möbelantrieb für einen weltweiten Einsatz ausgelegt.

Die oben beschriebenen Ausführungsbeispiele schränken die Erfindung nicht ein. Sie ist im Rahmen der beigefügten Ansprüche modifizierbar.

### Bezugszeichenliste

- 1: Elektromotorischer Möbelantrieb
- 2: Linearantrieb
- 3: Hubrohr
- 4: Gabelkopf
- 5: Energieversorgungseinrichtung
- 6: Motorsteuerung
- 7: Handbedienung
- 8: Netzstecker
- 9: Versorgungskabel
- 10: Eingangskreis
- 11: Zwischenkreis
- 12: Gleichrichtung
- 13: Schaltbaustein
- 14: Übertragereinheit
- 15: Sekundäreinheit
- 16: Optokoppler
- 17: Steuereinrichtung
- 18: Steuerungsversorgung
- 19: Galvanische Trennung
- 20: Betriebspunkt
- 21: Erste Transformatorkennlinie
- 22: Zweite Transformatorkennlinie
- 23: Kennlinie der Energieversorgungseinrichtung
- 24: Erster Abschnitt
- 25: Zweiter Abschnitt
- 26: Dritter Abschnitt
- 27: Leistungskurve
- 28: Einschaltabschnitt
- 29: Belastungsabschnitt
- 30: Freischalteinheit
- 31: Koppeleinheit
- 32: Steuerleitung
- 33: Ausgangsleitung
- 34: Ansteigende Flanke
- 35: Dachabschnitt
- 36: Abfallende Flanke
- 37: Ausschaltschwingung
- 38: Tal
- 39: Ausschaltpunkt
- 200: Netzkabel
- 210: Motorkabel
- l: Strom
- P: Leistung
- t: Zeit
- U: Spannung
- Uh: Haltespannung
- Us: Schaltspannung
- Uv: Versorgungsspannung

## Patentansprüche

1. Elektromotorischer Möbelantrieb (1) mit einer Energieversorgungseinrichtung (5) und mit einer Handbedienung (7) zum Verstellen von beweglichen Möbelbauteilen relativ zueinander,
wobei der elektromotorische Möbelantrieb (1) wenigstens einen drehrichtungsumkehrbaren Elektromotor aufweist, wobei jedem Elektromotor ein Drehzahlreduziergetriebe nachgeschaltet ist und wobei jedem Drehzahlreduziergetriebe ein weiteres Getriebe nachgeschaltet ist,
und wobei die Energieversorgungseinrichtung (5) einen Netzanschluss aufweist, welcher mit dem Netz verbindbar ausgebildet ist, wobei die Energieversorgungseinrichtung (5) die netzseitige Eingangsspannung in eine ausgangsseitige Kleinspannung transformiert, und einen Trenntransformator oder eine Übertragungseinheit zur galvanischen Trennung (19) zwischen der netzgebundenen Eingangsseite und der kleinspannungsgebenden Ausgangsseite zum Betrieb des elektromotorischen Möbelantriebs (1) aufweist, wobei die Energieversorgungseinrichtung (5) nach Art eines Schaltnetzteils ausgebildet ist und einen Zwischenkreis (11), eine Steuereinrichtung (17) zur Steuerung des Schaltnetzteils aufweist, und der Steuereinrichtung (17) eine Steuerungsversorgung (18) zugeordnet ist, wobei die Energieversorgungseinrichtung (5) einen Betriebszustand Aus bei Trennung vom Netz und einen Betriebszustand Betrieb im regulären Betrieb aufweist,
**dadurch gekennzeichnet,**
**dass** die Energieversorgungseinrichtung (5) mit einem Quasi-Resonanz-Wandler ausgebildet und für einen Betrieb mit quasi-quadratischen Wellenformen ausgelegt ist.

2. Elektromotorischer Möbelantrieb (1) nach Anspruch 1, **dadurch gekennzeichnet, dass** die Energieversorgungseinrichtung (5) einen weiteren Betriebszustand Freigeschaltet aufweist, in welchem die Energieversorgungseinrichtung (5) am Netz angeschlossen ist und die Steuereinrichtung (17) ausgeschaltet ist.

3. Elektromotorischer Möbelantrieb (1) nach Anspruch 2, **dadurch gekennzeichnet, dass** die Energieversorgungseinrichtung (5) eine Freischalteinheit (30) aufweist, die eingangsseitig über eine Koppeleinheit (31) mit der Motorsteuerung (6) und/oder der Handbedienung (7) gekoppelt ist und ausgangsseitig mit der Steuerungsversorgung (18) verbunden ist.

4. Elektromotorischer Möbelantrieb (1) nach Anspruch 3, **dadurch gekennzeichnet, dass** die Freischalteinheit (30) zum Ein- und Ausschalten der Steuerungsversorgung (18) ausgebildet ist.

5. Elektromotorischer Möbelantrieb (1) nach Anspruch 3 oder 4, **dadurch gekennzeichnet, dass** die Koppeleinheit (31) zur Erzeugung einer Versorgungsleistung für die Steuereinrichtung (17) ausgebildet ist.

6. Elektromotorischer Möbelantrieb (1) nach Anspruch 5, **dadurch gekennzeichnet, dass** die Koppeleinheit (31) ein aktiver Optokoppler ist.

7. Elektromotorischer Möbelantrieb (1) nach einem oder mehreren der vorgenannten Ansprüche, **dadurch gekennzeichnet, dass** die Freischalteinheit (30) über eine Sparversorgungsschaltung aus dem Eingangskreis (10) oder Zwischenkreis (11) mit elektrischer Energie im Betriebszustand Freigeschaltet versorgt ist.

8. Elektromotorischer Möbelantrieb (1) nach einem oder mehreren der vorgenannten Ansprüche, **dadurch gekennzeichnet, dass** die Motorsteuerung (6) oder/und die Handbedienung (7) mit einer Hilfsenergiequelle versehen ist/sind.

9. Elektromotorischer Möbelantrieb (1) nach einem oder mehreren der vorgenannten Ansprüche, **dadurch gekennzeichnet, dass** die Hilfsenergiequelle eine Batterie, ein Akkumulator oder/und ein Kondensator ist.

10. Elektromotorischer Möbelantrieb (1) nach einem oder mehreren der vorgenannten Ansprüche, **dadurch gekennzeichnet, dass** die Energieversorgungseinrichtung (5) einen Regelkreis aufweist, welcher einen Sanftanlauf und eine Überstromabschaltung des Elektromotors ermöglicht.

11. Elektromotorischer Möbelantrieb (1) nach einem oder mehreren der vorgenannten Ansprüche, **dadurch gekennzeichnet, dass** die Energieversorgungseinrichtung (5) zur Bereitstellung einer konstanten Leistung (P) bei einer Haltespannung (Uh) ausgebildet ist.

12. Elektromotorischer Möbelantrieb (1) nach einem oder mehreren der vorgenannten Ansprüche, **dadurch gekennzeichnet, dass** die Steuerungsversorgung (18) als netzgebundene Steuerungsversorgung (18) oder als netzungebundene Steuerungsversorgung (18), welche beispielsweise mit einer Batterie, einem Akkumulator oder einem Kondensator gekoppelt ist, ausgebildet ist
